# EUROPÄISCHE PATENTANMELDUNG

(11) **EP 1 744 199 A1**
(43) Veröffentlichungstag der Anmeldung: **17.01.2007**
(21) Anmeldenummer: 06117072.6
(22) Anmeldetag: 12.07.2006
(51) Int. Cl.: G02B 27/44, G02B 5/18, G01J 3/18

(54) **Scheibenförmiges Trägersystem mit einer Mehrzahl integrierter Beugungsstrukturen**

(30) Priorität: 12.07.2005 DE 102005033852
(71) Anmelder: Hach Lange GmbH, 14163 Berlin (DE)
(72) Erfinder: Mitreiter, Andreas, 14532, Kleinmachnow (DE); Hanschke, Clemens, 14167, Berlin (DE)
(74) Vertreter: Eisenführ, Speiser & Partner

(57) **Zusammenfassung**

Die Erfindung betrifft ein kreisscheibenförmiges Trägersystem mit einer Mehrzahl integrierter Beugungsstrukturen zur Spektralzerlegung von Licht der Wellenlängen 340 - 800 nm, wobei jede Beugungsstruktur eine Schicht aus einem transparenten Kunststoff umfasst, die eine zur Beugung einer innerhalb des Wellenlängenspektrums des Lichts liegende Wellenlänge geeignete Mikrostruktur aufweist, und das Trägersystem mindestens zwei Beugungsstrukturen zur Beugung von Licht unterschiedlicher Wellenlänge umfasst.

## Beschreibung

Die Erfindung betrifft ein scheibenförmiges Trägersystem mit einer Mehrzahl integrierter Beugungsstrukturen zur Spektralzerlegung von Licht der Wellenlängen 340 - 800 nm. Die Erfindung betrifft ferner ein Verfahren zur Herstellung derartiger Trägersysteme sowie ein Photometer, das ausgelegt ist, mit einem derartigen Trägersystem zu arbeiten.

Beugungsstrukturen für optische Geräte, häufig in Form von Beugungsgittern realisiert, sind hinreichend aus dem Stand der Technik bekannt und werden in der Regel aus Glas hergestellt, was allerdings kostspielig ist. Bekannt sind auch Beugungsgitter aus Kunststoff, die üblicherweise durch Prägeverfahren unter Verwendung einer Glas- oder Metall-Urform hergestellt werden. So ist beispielsweise aus H. Dislich, E. Hildebrandt: "Method of Production of Diffraction Gratings from Plastics with Inhibited Thermal Expansion", Optik 1968, Seiten 126-131 bekannt, Kunststoff-Beugungsgitter mit niedrigem thermischen Ausdehungskoeffizienten durch Polymerisation an einem Master aus Glas oder Glaskeramik zu erzeugen. Dieses Verfahren ist aufwendig und liefert dünne, mechanisch instabile Gitter-Folien.

Aus DE 43 40 103 A1, DE 43 40 106 A1 und DE 43 40 107 A1 sind Verfahren zur Herstellung strukturierter konkaver Beugungsgitter aus Kunststoff sowie diese Beugungsgitter enthaltende Spektralphotometer bekannt. Kerngedanke der dort beschriebenen Verfahren ist die Bereitstellung eines Werkzeugs mit dem das konkave Beugungsgitter durch Druck- oder Spritzgießen des Beugungsgittermaterials hergestellt werden kann. Das Beugungsgitter kann aus Epoxidharz, Silikonmasse oder einem Thermoplastwerkstoff bestehen.

Ein weiteres Verfahren zur Herstellung eines passiven optischen Bauelementes mit Echelette-Gittern beschreibt EP 0 242 574 B1. Das in dem Dokument beschriebene Verfahren nutzt eine röntgenlithographische Technik zur Erstellung der Gitterlinien des Echelette-Gitters. Auf röntgenlithographischgalvanoplastischem Wege wird ein Mutterwerkzeug hergestellt, dessen Strukturen die Negative der herzustellenden optischen Bauelemente aufweisen und an dem das optische Bauelement durch Abformen mit einem transparenten Kunststoff hergestellt wird.

Aus DE 197 13 483 A1 ist ein Spektrometer zur Bestimmung des Emissionsspektrums einer Lichtquelle oder des Absorptions- oder Reflexionsspektrums einer im Strahlengang der Lichtquelle angeordneten Probe bekannt, bei dem ein Beugungsgitter zur Beugung einer innerhalb des Emissionsspektrums der Lichtquelle liegenden Wellenlänge vorhanden ist. Das Beugungsgitter ist parallel zur Gitterebene verschiebbar oder um eine rechtwinklig zur Gitterebene oder parallel zu den Gitterlinien des Beugungsgitters angeordnete Drehachse drehbar. Es weist eine entlang der Bewegungsrichtung variierende Gitterkonstante auf. In einer Ausführungsform ist das Beugungsgitter als drehbare Kreisscheibe ausgeführt, die in mehrere kreissegmentförmige Bereiche, innerhalb derer die Gitterkonstante jeweils konstant ist, eingeteilt ist. Dabei wird das Beugungsgitter von Gitterlinien gebildet, die ausgehend vom Umfang der Kreisscheibe senkrecht in der Drehachse der Kreisscheibe münden. Mit anderen Worten, die Gitterlinien haben einen von der Entfernung zum Drehpunkt abhängigen Abstand untereinander und sind nicht äquidistant angeordnet. Zur Messung mit einer anderen Wellenlänge wird die Kreisscheibe soweit gedreht, dass der Lichtstrahl auf ein anderes Kreissegment fällt.

Die im Stand der Technik beschriebenen Beugungsgitter aus Kunststoff sind auf Spezialanwendungen abgestimmt. Bisher ist es nach Kenntnis der Anmelderin noch nicht zu einem massenhaften Einsatz von kunststoffbasierten Beugungsgittern zur Spektralzerlegung von Licht gekommen. Dies mag in der relativ aufwendigen Herstellung der kunststoffbasierten Beugungsgitter begründet sein, die in der Regel nur auf eine bestimmte Wellenlänge und einem bestimmten Einsatzzweck abgestimmt sind. Herkömmliche Lösungen gestalten einen Wechsel des in den Strahlengang eines Photometers angeordneten Beugungsgitters, z.B. um eine Justierung oder Kalibrierung zu ermöglichen oder um die Wellenlänge des gebeugten Lichtes zu ändern, schwierig oder lassen derartiges aufgrund einer feststehenden Messanordnung gar nicht erst zu.

Der Erfindung liegt die Aufgabe zugrunde, den Einsatz kunststoffbasierter Beugungsstrukturen zu vereinfachen und ein Trägersystem für eine Vielzahl von Beugungsstrukturen unterschiedlicher Wellenlängen, d. h. mit verschiedenen Gitterkonstanten, bereitzustellen.

Erfindungsgemäß wird diese Aufgabe durch das scheibenförmige Trägersystem mit den in Anspruch 1 genannten Merkmalen gelöst. Die Erfindung schließt die Lehre ein, zur Spektralzerlegung von Licht der Wellenlängen 340 - 800 nm ein kreisscheibenförmiges Trägersystem mit einer Mehrzahl integrierter Beugungsstrukturen bereitzustellen. Jede Beugungsstruktur umfasst dabei eine Schicht aus einem transparenten Kunststoff, die eine zur Beugung einer innerhalb des Wellenlängenspektrums des Lichts liegende Wellenlänge geeignete Mikrostruktur aufweist aufweist. Das Trägersystem umfasst ferner mindestens zwei Beugungsstrukturen zur Beugung von Licht unterschiedlicher Wellenlänge. Das kreisscheibenförmige Trägersystem aus einem transparenten Kunststoff kann kostengünstig in großer Stückzahl hergestellt werden. Die Beugungsstrukturen stellen in vielen Photometern einen den Gesamtpreis mitbestimmenden Faktor dar, der mit Hilfe des erfindungsgemäßen Trägersystems deutlich herabgesetzt werden kann.

Die Schicht aus dem transparenten Kunststoff besteht vorzugsweise aus Polymethylmethacrylat (PMMA). Die Vorzüge des Polymers liegen in seinen günstigen optischen und mechanischen Eigenschaften sowie der einfachen Verarbeitbarkeit, bei der sich insbesondere an im CD-Herstellungsverfahren etablierte Verarbeitungsverfahren angelehnt werden kann. Alternativ hierzu besteht die Schicht aus dem transparenten Kunststoff aus Polycarbonat (PC) oder Cycloolefin-Copolymeren (COC). Auch hier sind die optischen und mechanischen Eigenschaften der Polymere günstig für den erfindungsgemäßen Einsatzzweck. Das gesamte Trägersystem wird vorzugsweise aus dem gleichen transparenten Kunststoff hergestellt, der auch in den Beugungsstrukturen Einsatz findet.

Vorzugsweise entspricht das Trägersystem weiterhin in Form und Abmessung einer CD oder Single-CD. Eine CD gängiger Bauart hat einen Durchmesser von etwa 120 mm und eine Single-CD hat einen Durchmesser von etwa 80 mm. CD oder Single-CD haben eine Dicke von ca. 1,2 mm. Der Vorteil der Anlehnung an die Form und Abmessungen von CD bzw. Single-CD liegt unter anderem darin, dass auf Fertigungstechniken und dazugehörigen Fertigungsapparaturen zurückgegriffen werden kann. Weiterhin lässt sich ein derart modifiziertes Trägersystem besonders einfach in ein Photometer integrieren, d.h. die verstellbare Halterung für das Trägersystem kann in der Ausführung an gängige Halterungen für CD oder Single-CD angelehnt werden.

Vorzugsweise sind die einzelnen Beugungsstrukturen radial im Umfang um einen definierten Drehpunkt des Trägersystems angeordnet. Die Halterung des Photometers zentriert das Trägersystem in diesem Falle um diesen Drehpunkt, so dass mit einer einfachen Drehbewegung ein Wechsel der Beugungsstrukturen im Strahlengang des Photometers erreicht werden kann. Vorzugsweise sind die Beugungsstrukturen dazu winkelgenau äquidistant auf dem Trägersystem verteilt.

Das Trägersystem weist ferner vorzugsweise eine oder mehrere Markierungen zur Bestimmung einer relativen Lage der einzelnen Beugungsstrukturen auf dem Trägersystem auf. Auf diese Weise kann erfasst werden, welche Beugungsstruktur sich gerade im Strahlengang des Photometers befindet. Wenn die einzelnen Beugungsstrukturen radial im Umfang um einen definierten Drehpunkt des Trägersystems angeordnet sind, ersetzt die Markierung vorzugsweise eine der radial im Umfang um den definierten Drehpunkt des Trägersystems angeordnete Beugungsstruktur. In dieser Ausführungsform sind die die Markierung und die Beugungsstrukturen vorzugsweise winkelgenau äquidistant auf dem Trägersystem verteilt. Im Bereich der Markierung weist das Trägersystem keine Beugungsstruktur auf. Der in dem Markierungsbereich nicht gebeugte Lichtstrahl wird von einem geeigneten Detektor im Photometer erfasst. Das Photometer liefert ein vom Auftreffen oder Nichtauftreffen des Lichtstrahls abhängiges Signal, das in an sich bekannter Weise mit Hilfe einer Steuerung ausgewertet werden kann und als Eingangsgröße der Lagebestimmung der Beugungsstrukturen dient.

Bevorzugt ist ferner, wenn die einzelnen Beugungsstrukturen jeweils eine Strahlquerschnittsfläche mit Abmessung zwischen 4 x 4 mm bis 8 x 8 mm bereitstellen. Insbesondere sind die einzelnen Beugungsstrukturen vorzugsweise kreisförmig ausgebildet und die Kreise weisen einen Durchmesser zwischen 7 - 9 mm auf.

Die Beugungsstruktur ist vorzugsweise ein Reflexionsgitter und auf der mikrostrukturierten Schicht ist eine Reflexionsschicht aus einem das Licht reflektierendem Material, insbesondere Aluminium, aufgebracht. Auf die Reflexionsschicht kann vorzugsweise noch eine Schutzschicht aus einem transparenten Kunststoff, insbesondere einem UV-härtenden Lack aufgebracht werden.

Die Beugungsstruktur kann alternativ auch ein Transmissionsgitter sein. Transmissionsgitter haben gegenüber Reflexionsgittern den Vorteil, dass der gebeugte Lichtstrahl bei einer fehlerhaften Neigung der Gitterebene gegenüber dem einfallenden Lichtstrahl nur um den einfachen Neigungswinkel abgefälscht wird, wohingegen der reflektierte Lichtstrahl bei Reflexionsgittern um den doppelten Neigungswinkel abgefälscht wird. Bei der Verwendung von Transmissionsgittern sind die Anforderungen an die Präzision der räumlichen Ausrichtung der Beugungsstrukturen, insbesondere die Ebenheit des Trägersystems, also geringer als bei Reflexionsgittern.

Die Beugungsstrukturen sind vorzugsweise als Beugungsgitter mit einer Vielzahl äquidistanter Gitterlinien verwirklicht. Eine Anzahl der Gitterlinien sowie deren Form und Tiefe bestimmt die Wellenlänge des in einem vorgebbaren Winkel gebeugten Lichtes. Die Beugungsstruktur ist vorzugsweise ferner als ebenes Beugungsgitter verwirklicht. Beugungsstrukturen mit den vorgenannten Merkmalen lassen sich im Vergleich zu nicht ebenen Beugungsgittern und Beugungsgittern mit nicht äquidistanten Gitterlinien fertigungstechnisch einfacher realisieren.

Ein Trägersystem für Beugungsstrukturen mit den vorgenannten Eigenschaften kann nach einem zweiten Aspekt der Erfindung kostengünstig und in großer Stückzahl hergestellt werden, indem das Verfahren die Schritte umfasst:
(i) Herstellung einer Matrize, enthaltend die Negative der Beugungsstrukturen,
(ii) Aufnahme der Matrize in ein Formwerkzeug,
   (a) Erwärmen eines transparenten Kunststoffs mittels des Formwerkzeugs und Umformen des erwärmten Kunststoffs (Heizprägen) oder
   (b) Einspritzen einer Schmelze aus einem transparenten Kunststoff in ein geschlossenes Formwerkzeug (Spritzgießen) oder
   (c) Einspritzen einer Schmelze aus einem transparenten Kunststoff in ein nicht vollständig geschlossenes Formwerkzeug und Schließen des Formwerkzeugs mit Umformen des noch schmelzflüssigen Kunststoffs (Spritzprägen).

Die Herstellung der Matrizen kann in gängiger Weise erfolgen, insbesondere mit Rückgriff auf die aus der CD-Herstellung etablierten Fertigungstechniken. Dies umfasst z. B. die Herstellung eines Glasmaster mit einer mikrostrukturierten Oberfläche als Vorstufe des eigentlichen Presswerkzeuges, dem Stamper (Metall-CD-Rohling). Die mikrostrukturierte Oberfläche wird mittels Laserstrahl auf einer speziell beschichtete Glasplatte, dem späteren Glasmaster, übertragen. Durch Metallisierung und Galvanik entsteht daraus der Stamper (Matrize), der Ausgangspunkt für die Replikation ist. Dieses Verfahren ermöglicht die Herstellung von Beugungsstrukturen mit relativ großer Gitterkonstante.

Für Beugungsstrukturen mit kleiner Gitterkonstante muss abweichend von der CD-Technologie ein anderes Masterherstellverfahren genutzt werden. Zur Herstellung der Matrize wird zunächst ein mit Chrom beschichteter Quarzträger mit einem für Elektronenstrahlung empfindlichen Lack beschichtet und mit einem Elektronenstrahlschreiber eine Mikrostruktur in den Lack einbelichtet. Durch Variation des anschließenden Entwicklungsprozesses des belichteten Lackes (z. B. durch Variation der Entwicklungszeit und der bei der Entwicklung herrschenden Temperatur) wird eine Strukturtiefe der Mikrostruktur eingestellt und ein Master für die Matrize erhalten. Zur Herstellung der Matrize wird dieser Master entweder galvanisch, insbesondere mit Nickel, oder mit einem Gießharz, insbesondere Epoxidharz, abgeformt. Die Matrize wird als Vorlage für die Herstellung des Formwerkzeuges genutzt.

Ein derartiges auf einer Kreischeibe zusammengefasstes Trägersystem mit mehreren Beugungsstrukturen unterschiedlicher spektraler Auslegung ermöglicht bei Integration des Trägersystems in ein Photometer eine schnelle, wenig aufwendige aber noch hinreichend genaue Änderung der an der Struktur gebeugten Wellenlänge, in dem die gewünschte Beugungsstruktur in den Strahlengang des Messoptik gefahren wird. Das Photometer weist nach einem dritten Aspekt der Erfindung Mittel zur Aufnahme und Integration eines Trägersystems mit den zuvor beschriebenen Merkmalen in eine Optik des Photometers auf. Das Photometer umfasst dazu vorzugsweise eine verstellbare Halterung für das Trägersystem, die
(i) das Trägersystem so im Photometer ausrichtet, dass eine Beugungsstruktur des Trägersystems im Strahlengang des Photometers angeordnet ist, und
(ii) Mittel umfasst, die einen Wechsel der im Strahlengang des Photometers befindlichen Beugungsstruktur des Trägersystems ermöglicht.

Die Mittel zum Wechsel der Beugungsstruktur im Strahlengang des Photometers umfassen insbesondere einen Schrittmotor, der das Trägersystem schrittweise, z.B. durch Drehen, so verlagert, dass die im Trägersystem integrierten Beugungsstrukturen nacheinander in den Strahlengang geschwenkt werden können.

Die Erfindung wird nachfolgend anhand von Ausführungsbeispielen und den dazugehörigen Zeichnungen näher erläutert. Es zeigen:
Fig. 1 ein erfindungsgemäßes Trägersystem in einer ersten Ausführungsform als CD;
Fig. 2 ein erfindungsgemäßes Trägersystem in einer zweiten Ausführungsform als Single-CD;
Fig. 3 eine schematische Darstellung eines Photometers mit einem drehbaren, kreisscheibenförmigen Trägersystem;
Fig. 4a und 4b in einer Draufsicht und Seitenansicht eine Halterung und eine Optik als Bestandteil eines Photometers, welches zur Aufnahme des Trägersystem ausgelegt ist;
Fig. 5 schematische Darstellungen des Strahlengangs in einem Photometer mit einer der Optik gemäß den Fig. 4a und 4b; und
Fig.6 eine photographische Wiedergabe eines Trägersystems in Form einer CD.

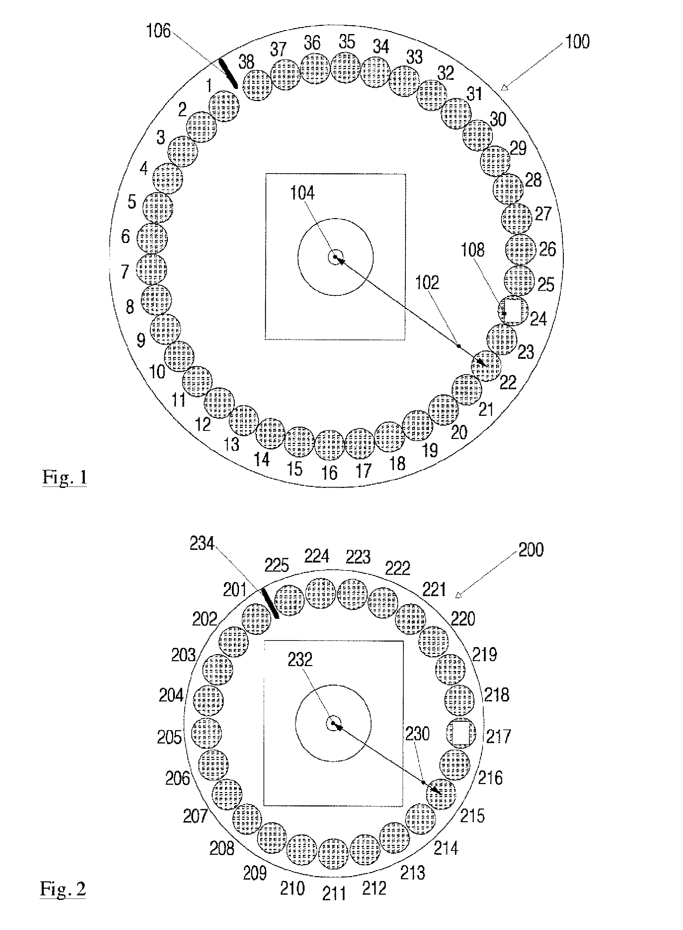

Figur 1 zeigt ein kreisscheibenförmiges Trägersystem 100 in Form und in den Abmessungen einer handelsüblichen CD, dass heißt mit einem Durchmesser von ca. 120 mm und einer Dicke von ca. 1,2 mm. Das Trägersystem 100 ist aus dem transparenten Kunststoff Polymethylmethacrylat (PMMA) geformt. In einem Radius 102 von 50 mm sind insgesamt 38 Beugungsstrukturen, hier realisiert als Beugungsgitter 1 - 38, kreisförmig um einen Drehpunkt 104 des Trägersystems 100 angeordnet.

In einer Position zwischen dem Beugungsgitter 1 und dem Beugungsgitter 38 ist eine Markierung 106 vorgesehen, die zur Erkennung der Gitterstellung, d. h. zur Erkennung der relativen Lage der einzelnen Beugungsgitter 1 - 38 auf dem Trägersystem 100 dient. Die Markierung 106 ist dabei so ausgelegt, dass sie von einer geeigneten Erkennungseinheit im Photometer, in das das Trägersystem 100 eingesetzt wird, erfasst werden kann. Die Beugungsgitter 1-38 selbst sind winkelgenau äquidistant auf dem Trägersystem 100 verteilt, so dass von einer einmaligen Startposition jedes Beugungsgitter 1 - 38 über den gleichen Winkelabstand angefahren werden kann. Man muß also nur einmalig die Startposition des Trägersystems 100 erkennen und kann anschließend über die Winkeldifferenzen die Beugungsgitter 1 - 38 anfahren.

Die einzelnen Beugungsgitter 1 - 38 dienen der Spektralzerlegung von Licht und sind ebenfalls aus dem transparenten Kunststoff Polymethylmethacrylat (PMMA) geformt. Die Bereiche der Beugungsgitter 1 - 38 des Trägersystems 100 unterscheiden sich von den restlichen Abschnitten des Trägersystems 100 dadurch, dass sie eine mikrostrukturierte Oberfläche aufweisen mit äquidistanten, in einer gemeinsamen Ebene angeordneten Gitterlinien. Die Tiefe und Geometrie sowie insbesondere die Anzahl der Gitterlinien der Beugungsgitter 1-38 unterscheidet sich in mindestens zwei der Beugungsgitter 1 - 38, d. h. sie sind jeweils zur Beugung unterschiedlicher Wellenlängen optimiert. Vorliegend weisen alle Beugungsgitter 1 - 38 jeweils eine voneinander abweichende Mikrostruktur auf, und zwar derart, dass sie sukzessiv ansteigende Wellenlängen über einen Spektralbereich von 340 - 800 nm beugen (Beugung in erster Ordnung). Jedes Gitter deckt dabei einen Spektralbereich von ca. 12 nm ab und Spaltbreite und Lineardispersion werden so vorgegeben, dass dieser Wert erreicht wird. Die einzelnen Beugungsgitter 1-38 können in bekannter Weise berechnet werden, d. h. es kann die Tiefe der Mikrostruktur und vor allem die Anzahl der Gitterlinien vorausberechnet werden, um in einem vorgegebenen Winkel einen - nach erster Ordnung - gebeugten Lichtstrahl bestimmter Wellenlänge und Intensität zu erhalten.

Das vorliegende Trägersystem 100 ist als Transmissionsgitter ausgelegt, d. h. der Lichtstrahl tritt etwa mit 0° Neigung zur Oberflächennormale der Beugungsgitter 1- 38 ein, wird entsprechend den jeweiligen optischen Eigenschaften des Beugungsgitters 1 - 38 gebeugt und tritt an der Unterseite des Trägersystems 100 aus. Denkbar ist natürlich auch, dass unter einem definierten Winkel eingestrahlt wird und das gebeugte Licht z. B. unter 0 ° Neigung empfangen wird.

Zur Kalibrierung und Funktionskontrolle können drei Beugungsgitter auf Beugungswellenlängen von 361 nm optimiert werden. Zu Justage eignet sich ferner ein Beugungsgitter der Wellenlänge 633 nm in Kombination mit einem Helium-Neon-Laser und einem Bereich auf dem Trägersystem ohne Beugungsgitter, um durch Erfassung der Transmission die genaue Winkelposition des Trägersystems zu erkennen. In diesem Fall kann auf die Markierung 106, wie sie das Trägersystem 100 aus Fig. 1 zeigt, verzichtet werden.

Wie bereits erläutert, sind die Beugungsgitter 1 - 38 radial im Umfang des Trägersystems 100 in einem Radius von 50 mm angeordnet. Die einzelnen Beugungsgitter 1 - 38 sind dabei kreisförmig ausgelegt und haben einen Durchmesser von 8 mm. Hierdurch kann beispielsweise eine Strahlenquerschnittsfläche 108 von 6 x 4,5 mm bereitgestellt werden.

Wenn die vorliegenden 38 Beugungsgitter für einen Spektralbereich 360-700 nm ausgelegt werden, so sollte jedes Beugungsgitter einen Spektralbereich von ca. 8,9 nm abdecken.

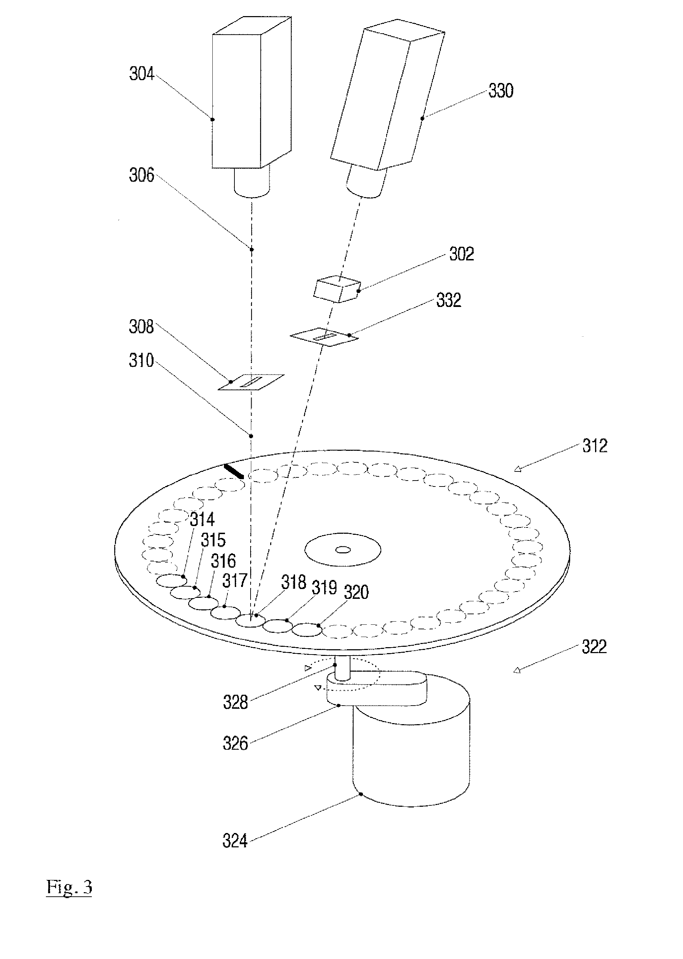

In der Figur 2 ist ein Trägersystem 200 abgebildet, das in seinem Aufbau weitestgehend dem bereits in Figur 1 geschilderten Trägersystem 100 gleicht. Insofern wird auf vorangehende Ausführungen verwiesen. Das Trägersystem 200 ist im Unterschied zum Trägersystem 100 der Fig. 1 in Form und Abmessung an eine Single-CD angepasst, d. h. es hat einen Durchmesser von ca. 80 mm und eine Dicke von ca. 1,2 mm. Die Beugungsgitter 201 - 225 sind in einem Radius 230 von ca. 34 mm um einen Drehpunkt 232 des Trägersystems 200 angeordnet. Eine Markierung 234 dient der Erkennung der relativen Lage der Beugungsgitter 201 - 225.

Sollen die 25 Gitter 201 - 225 des Trägersystems 200 aus Figur 2 einen Spektralbereich von 340 - 800 nm abdecken, so sollte jedes Beugungsgitter 201 - 225 einen Spektralbereich von ca. 18,4 nm abdecken. Ist der gesamte Spektralbereich auf 360 - 700 nm eingeschränkt, so sollte jedes Beugungsgitter 201 - 225 einen Spektralbereich von ca. 13,6 nm abdecken.

Figur 3 dient der schematischen Illustration des Aufbaus eines Photometer, das ein kreisscheibenförmiges Trägersystem mit einer Mehrzahl integrierter, ebener Beugungsgitter zur Spektralzerlegung von Licht der Wellenlängen 340 - 800 nm nutzt. Zur Bestimmung eines Absorptionsspektrums wird eine Probe 302 im Strahlengang einer Lichtquelle 304 angeordnet. Die Lichtquelle 304 emittiert einen relativ weit gefächerten Lichtbündel und hat ein breitbandiges Emissionsspektrum, das den interessierenden Wellenlängenbereich für die Absorptionsmessung vollständig abdeckt. Im Strahlengang ist eine Blende 308 mit einem Spalt angeordnet, die aus dem von der Lichtquelle 304 emittierten, relativ weit gefächerten Lichtbündel 306 einen eng begrenzten Lichtstrahl 310 ausblendet. Diese als Eintrittspalt bezeichnete Blende 308 ist mitbestimmend für die spektrale Bandbreite des Photometers. Sie bestimmt weiterhin die Lichtmenge, die durch das System gelangt und auf welche Strahlabmessung das weitere optische System ausgelegt sein muss.

Das Trägersystem 312 ist in Form und Abmessungen an eine herkömmliche CD angepasst. Es weist eine Mehrzahl integrierter ebener Beugungsgitter 314 - 320 auf, die im Umfang des kreisscheibenförmigen Trägersystems 312 angeordnet sind. Das Trägersystem 312 besteht aus Polycarbonat und weist im Bereich der Beugungsgitter 314 - 320 eine geeignete Mikrostrukturierung mit Gitterlinien auf, um den Lichtstrahl 310 zu beugen und zu reflektieren, wobei der reflektierte Strahl eine vorgegebene Wellenlänge aufweist. Vorliegend sind die Beugungsgitter 314 - 320 als Reflexionsgitter ausgelegt. Dazu wird auf die mikrostrukturierte erste Schicht der Beugungsgitter 314 - 320 eine Reflexionsschicht aus einem im Wellenlängenbereich des Lichts reflektierenden Material aufgebracht (nicht näher dargestellt). Im vorliegenden Falle besteht die Reflexionsschicht aus Aluminium. Auf diese Reflexionsschicht wird zu Stabilisierungszwecken eine Schutzschicht aus einem transparenten Kunststoff, insbesondere einem UV-härtenden Lack aufgebracht.

Das Trägersystem 312 lagert in einer lösbaren Halterung 322 des Photometers. Mit der Halterung 322 können die Beugungsgitter 314 - 320 exakt im Strahlengang des Photometers angeordnet werden. Die Halterung 322 umfasst weiterhin einen Schrittmotor 324, der über ein Getriebe 326 und eine Welle 328 einen Wechsel des im Strahlengang des Photometers befindlichen Beugungsgitters 314 - 320 ermöglicht. Die Drehung des Trägersystems 312 erfolgt demnach mit Hilfe des Schrittmotors 324. Das Trägersystem 312 während der Messung in verschiedene Stellungen gedreht, wobei in jeder Stellung der Lichtstrahl 310 auf ein anderes Beugungsgitter 314 - 320 trifft.

Eine Intensität des gebeugten und durch die Probe 302 durchgetretenen Lichtes erster Ordnung wird erfasst. Auf Grund der Beugung an den Reflexionsgittern 314 - 320 entsteht demnach in einem bestimmten Winkel zum einfallenden Lichtstrahl 310 ein Beugungsmaximum erster Ordnung, dessen Intensität von einem Lichtdetektor 330 erfasst wird, wobei im Strahlengang zwischen dem Beugungsgitter 314 - 320 und dem Lichtdetektor 330 eine weitere Blende 332 mit einem Spalt angeordnet ist, um eine möglichst gute Winkeltrennung des Lichtdetektors 330 zu erreichen und den Einfluss von Störlicht weitestgehend auszuschalten.

Der Beugungswinkel und damit die räumliche Lage des Beugungsmaximums erster Ordnung ist abhängig zum einen von der Gitterkonstante des Beugungsgitters 314 - 320 und zum anderen von der Wellenlänge des einfallenden Lichtstrahls 310, so dass das Beugungsgitter 314 - 320 spektralzerlegend wirkt und der Lichtdetektor 330 jeweils nur die Intensität eines Spektralanteils mit einer bestimmten Wellenlänge misst. Zur Messung der Intensität einer bestimmten Wellenlänge wird das entsprechende Beugungsgitter 314 - 320 in den Strahlengang mit Hilfe des Schrittmotors 324 gedreht.

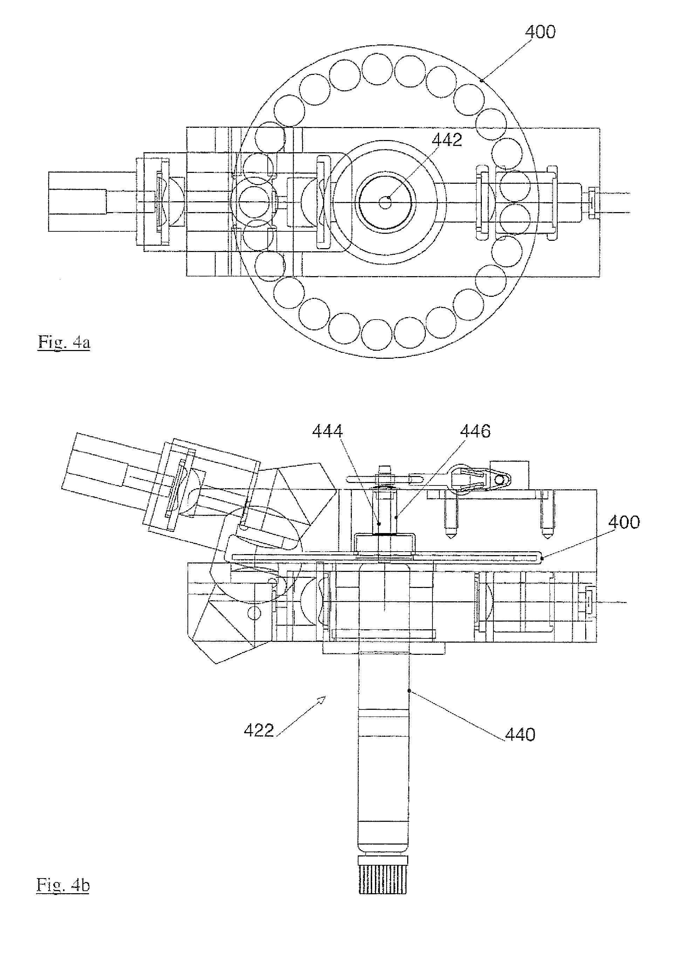

Die Figuren 4a und 4b zeigen in einer Draufsicht und Seitenansicht auf eine technische Zeichnung eine Halterung 422 und Teile einer Optik als Bestandteile eines Photometers, welches zur Aufnahme des Trägersystems 400 ausgelegt ist. Wie ersichtlich, lagert das in Form einer CD ausbildete Trägersystem 400 auf einer Welle 440, die von einem - hier nicht dargestellten - Schrittmotor in Rotation versetzt werden kann. Das Trägersystem 400 weist mittig einen für die Lagerung auf der Welle 440 besonders ausgeformten Bereich auf, der unter anderem eine Bohrung 442 umfasst. Durch die Bohrung 442 greift ein Stift 444 als Bestandteil eines Konterstücks 446 der Halterung 422, die das Trägersystem 400 an der Welle 440 in definierter Lage festlegt.

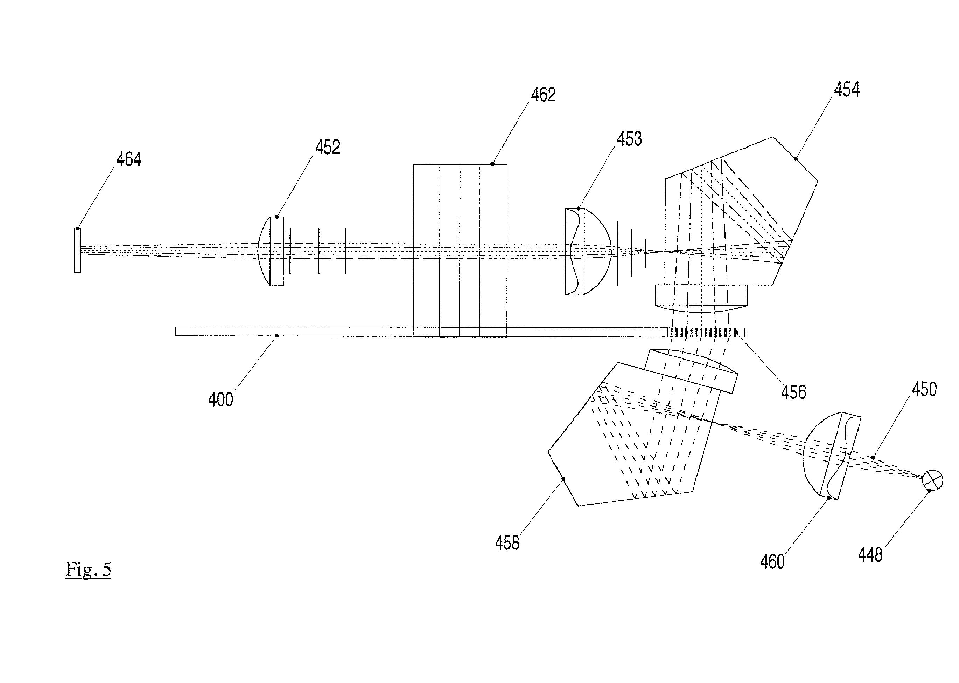

Die Fig. 5 illustriert den Strahlengang in einem Photometer mit einer Optik, wie sie in den Fig. 4a und 4b dargestellt ist. Aus einer Lichtquelle 448 wird ein Lichtstrahl 450 emittiert und mit im Strahlengang unterhalb des Trägersystems 400 angeordneten optischen Elementen 458 auf ein im Trägersystem 400 integriertes Beugungsgitter 456 (genauer die Strahlquerschnittfläche des Beugungsgitters 456) gelenkt. Die Lichtstrahl 450 tritt durch das Beugungsgitter 456 hindurch und wird in erster Ordnung wie dargestellt gebeugt. Er wird mit Hilfe weiterer optischer Elemente 454 und 453 umgelenkt und fokussiert auf eine hier dargestellte Probe 462. Anschließend wird der Lichtstrahl 450 mittels Linse 452 auf den Empfänger 464 abgebildet.

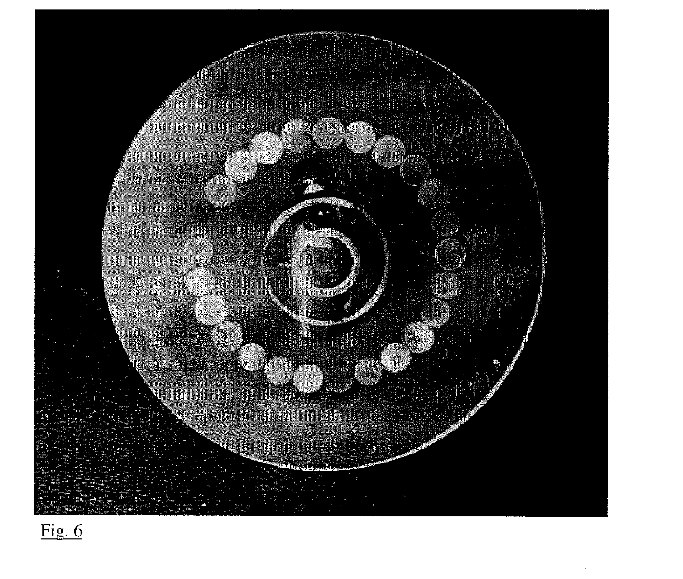

Fig. 6 zeigt ein Photo eines aus Polymethylmethacrylat (PMMA) hergestellten Trägersystems mitradial im Umfang angeordneten Beugungsgittern.

Mit Hilfe des Trägersystems lassen sich demnach Beugungsgitter im Verbund bereitstellen, die auch strahlformende Funktion haben, und in Fresnel-Linsen oder zur diffraktiven Strahlformung Einsatz finden können.

Eine Herstellung der Trägersysteme kann mit Rückgriff auf bekannte CD-Fertigungsprozesse erfolgen. Zunächst wird dazu in bekannter Weise eine Matrize hergestellt, die an Ihre Oberfläche Mikrostrukturen aufweist, die ein Negativ der Mikrostrukturen der späteren Beugungsgitter darstellen. Die eigentliche Fertigung kann entweder durch Heißprägen, Spritzgießen oder Spritzprägen des transparenten Kunststoffs erfolgen. Beim Heißprägen wird mit Hilfe der Matrize ein Prägestempel als Formwerkzeug hergestellt, über das das Kunststoffsubstrat erwärmt wird, wobei der erwärmte Kunststoff umgeformt wird. Beim Spritzgießen ist die Matrize Teil eines geschlossenen Formwerkzeugs und eine Kunststoffschmelze wird in dieses geschlossene Werkzeug eingespritzt. Beim Spritzprägen ist die Matrize wiederum Bestandteil eines Formwerkzeugs, jedoch ist das Werkzeug beim Einspritzen der Kunststoffschmelze nicht vollständig geschlossen und wird erst nach dem Einspritzen geschlossen, wobei die noch schmelzflüssige Masse umgeformt wird. Sofern die Beugungsgitter als Reflexionsgitter dienen sollen, wird in einem nachfolgenden Schritt eine Reflexionsschicht aus Aluminium aufgedampft. Die Mikrostruktur kann anschließend noch mit einer Schutzschicht aus einem polymeren Lack gegen Umwelteinflüsse geschützt werden.

## Patentansprüche

1. Kreisscheibenförmiges Trägersystem (100, 200, 312, 400) mit einer Mehrzahl integrierter Beugungsstrukturen (1 - 38, 201 - 225, 314 - 320) zur Spektralzerlegung von Licht der Wellenlängen 340 - 800 nm, wobei jede Beugungsstruktur (1 - 38, 201 - 225, 314 - 320) eine Schicht aus einem transparenten Kunststoff umfasst, die eine zur Beugung einer innerhalb des Wellenlängenspektrums des Lichts liegende Wellenlänge geeignete Mikrostruktur aufweist, und das Trägersystem (100, 200, 312, 400) mindestens zwei Beugungsstrukturen (1 - 38, 201 - 225, 314 - 320) zur Beugung von Licht unterschiedlicher Wellenlänge umfasst.

2. Trägersystem nach Anspruch 1, bei dem die Schicht aus Polymethylmethacrylat (PMMA) besteht.

3. Trägersystem nach Anspruch 1, bei dem die Schicht aus Polycarbonat (PC) oder Cycloolefin-Copolymeren (COC) besteht.

4. Trägersystem nach Anspruch 1, bei dem das Trägersystem (100, 200, 312, 400) in Form und den Abmessungen einer CD oder Single-CD entspricht.

5. Trägersystem nach Anspruch 1, bei dem die Beugungsstrukturen (1 - 38, 201 - 225, 314 - 320) radial im Umfang um einen definierten Drehpunkt (104, 232) des Trägersystems (100, 200, 312, 400) angeordnet sind.

6. Trägersystem nach Anspruch 5, bei dem die Beugungsstrukturen (1 - 38, 201 - 225, 314 - 320) winkelgenau äquidistant auf dem Trägersystem (100, 200, 312, 400) verteilt sind.

7. Trägersystem nach Anspruch 1, bei dem das Trägersystem (100, 200, 312, 400) eine oder mehrere Markierungen (106) zur Bestimmung einer relativen Lage der einzelnen Beugungsstrukturen (1 - 38, 201 - 225, 314 - 320) auf dem Trägersystem (100, 200, 312, 400) aufweist.

8. Trägersystem nach den Ansprüchen 5 und 7, bei dem die Markierung (106) eine der radial im Umfang um einen definierten Drehpunkt (104, 232) des Trägersystems (100, 200, 312, 400) angeordnete Beugungsstruktur (1 - 38, 201 - 225, 314 - 320) ersetzt.

9. Trägersystem nach Anspruch 8, bei dem die Markierung (106) und die Beugungsstrukturen (1 - 38, 201 - 225, 314 - 320) winkelgenau äquidistant auf dem Trägersystem (100, 200, 312, 400) verteilt sind.

10. Trägersystem nach Anspruch 1, bei dem die einzelnen Beugungsstrukturen (1 - 38, 201 - 225, 314 - 320) kreisförmig sind und die Kreise einen Durchmesser zwischen 7 bis 9 mm aufweisen.

11. Trägersystem nach Anspruch 1, bei dem die einzelnen Beugungsstrukturen (1 - 38, 201 - 225, 314 - 320) jeweils eine Strahlquerschnittsfläche mit Abmessungen zwischen 4 x 4 mm bis 8 x 8 mm bereitstellen.

12. Trägersystem nach Anspruch 1, bei dem die Beugungsstruktur (1 - 38, 201 - 225, 314 - 320) ein Transmissionsgitter ist.

13. Trägersystem nach Anspruch 1, bei dem die Beugungsstruktur (1 - 38, 201 - 225, 314 - 320) ein Reflexionsgitter ist und auf der mikrostrukturierten Schicht eine Reflexionsschicht aus einem das Licht reflektierendem Material aufgebracht ist.

14. Trägersystem nach Anspruch 13, bei dem die Reflexionsschicht aus Aluminium besteht.

15. Trägersystem nach Anspruch 14, bei dem auf der Reflexionsschicht eine Schutzschicht aus einem transparenten Kunststoff aufgebracht ist.

16. Trägersystem nach Anspruch 15, bei dem die Schutzschicht aus einem UV-härtenden Lack besteht.

17. Trägersystem nach Anspruch 1, bei dem die Beugungsstruktur (1 - 38, 201 - 225, 314 - 320) ein Beugungsgitter mit äquidistanten Gitterlinien ist.

18. Trägersystem nach Anspruch 17, bei dem die Beugungsstruktur (1 - 38, 201 - 225, 314 - 320) ein ebenes Beugungsgitter ist.

19. Verfahren zur Herstellung eines kreisscheibenförmigen Trägersystems nach einem der Ansprüche 1 bis 18, umfassend die Schritte
(i) Herstellung einer Matrize, enthaltend die Negative der Beugungsstrukturen (1 - 38, 201 - 225, 314 - 320),
(ii) Aufnahme der Matrize in ein Formwerkzeug,
(a) Erwärmen eines transparenten Kunststoffs mittels des Formwerkzeugs und Umformen des erwärmten Kunststoffs (Heizprägen) oder
(b) Einspritzen einer Schmelze aus einem transparenten Kunststoff in ein geschlossenes Formwerkzeug (Spritzgießen) oder
(c) Einspritzen einer Schmelze aus einem transparenten Kunststoff in ein nicht vollständig geschlossenes Formwerkzeug und Schließen des Formwerkzeugs mit Umformen des noch schmelzflüssigen Kunststoffs (Spritzprägen).

20. Verfahren nach Anspruch 19, bei dem zur Herstellung der Matrize ein mit Chrom beschichteter Quarzträger mit einem für Elektronenstrahlung empfindlichen Lack beschichtet wird und mit einem Elektronenstrahlschreiber eine Mikrostruktur in den Lack einbelichtet wird.

21. Verfahren nach Anspruch 20, bei dem durch Variation des anschließenden Entwicklungsprozesses des belichteten Lackes eine Strukturtiefe der Mikrostruktur eingestellt wird und ein Master für die Matrize erhalten wird.

22. Verfahren nach Anspruch 21, bei dem zur Herstellung der Matrize der Master entweder galvanisch, insbesondere mit Nickel, oder mit einem Gießharz, insbesondere Epoxidharz, abgeformt wird.

23. Photometer mit Mitteln zur Aufnahme und Integration eines Trägersystems (100, 200, 312, 400) nach einem der Ansprüche 1 bis 18 in eine Optik des Photometers.

24. Photometer nach Anspruch 23, **dadurch gekennzeichnet, dass** eine lösbare Halterung für das Trägersystem (100, 200, 312, 400) vorhanden ist, die
(i) das Trägersystem (100, 200, 312, 400) so im Photometer ausrichtet, dass eine Beugungsstruktur (1 - 38, 201 - 225, 314 - 320) des Trägersystems (100, 200, 312, 400) im Strahlengang des Photometers angeordnet ist, und
(ii) Mittel umfasst, die einen Wechsel der im Strahlengang des Photometers befindlichen Beugungsstruktur (1 - 38, 201 - 225, 314 - 320) des Trägersystems (100, 200, 312, 400) ermöglicht.
